# EUROPEAN PATENT APPLICATION

(11) **EP 1 939 842 A2**
(43) Date of publication of application: **02.07.2008**
(21) Application number: 07025138.4
(22) Date of filing: 27.12.2007
(51) Int. Cl.: G09G 3/00, H04N 5/66

(54) **Display device**

(30) Priority: 28.12.2006 JP 2006354991
(71) Applicant: SEMICONDUCTOR ENERGY LABORATORY CO., LTD., Atsugi-shi, Kanagawa-ken 243-0036 (JP)
(72) Inventor: Koyama, Jun, Atsugi-shi Kanagawa-ken 243-0036 (JP); Hata, Yuki, Atsugi-shi Kanagawa-ken 243-0036 (JP); Nagatsuka, Shuhei, Atsugi-shi Kanagawa-ken 243-0036 (JP); Kimura, Akihiro, Takamatsu-shi Kagawa-ken, 761-8014 (JP)
(74) Representative: Grünecker, Kinkeldey, Stockmair & Schwanhäusser Anwaltssozietät

(57) **Abstract**

An objed of the present invention is to provide a display device which does not need an input/output terminal such as an FPC or a cable for connecting to the display device and inputting an image signal to the display device directly, and can provide a setting, a display image, and the like which an operator desires. A display device of the present invention includes a display portion, a console portion to operate or input from the exterior, an antenna portion to transmit and receive a radio signal, a controller portion to control a signal input into the console portion and a signal for being transmitted or received in the antenna portion, and a battery portion to convert the radio signal received in the antenna portion into electric power and retain the electric power for driving the display portion.

## Description

### BACKGROUND OF THE INVENTION

### 1. Field of the Invention

The present invention relates to a display device for displaying an image, in particular, to a display device to carry out data communication utilizing radio technology.

### 2. Description of the Related Art

With the coming of advanced information society, demands for computers, navigation systems, personal digital assistants, information communication devices, and composite products thereof have been increasing in recent years. Thin and light-weight display devices with low power consumption are suitable for display systems of these products, and liquid crystal display devices or display devices utilizing self-luminous electro-optic elements such as light-emitting EL elements or LEDs are used.

Such a display device has a built-in power supply for drive, and a method has been used in which an image signal is supplied externally by a flexible printed circuit (an FPC) or a cable.

However, problems such as increase in size of the outer shape, heat generation, and the like caused by building the power supply into the display device can have a significant influence depending on use environment and usage of the display device. Further, video content such as an image or a picture is provided through an FPC or a cable connected directly to the display device, and there can occur a problem such as a disconnection of the FPC or the cable due to aged deterioration, mechanical stress, or the like.

As a measure to solve the above problems, Patent Document 1 (Japanese Published Patent Application No. 2006-18132) proposes a display device that does not need an input/output terminal such as an FPC or a cable for connecting to the display device and inputting an image signal to the display device directly.

### SUMMARY OF THE INVENTION

With respect to the display device disclosed in Patent Document 1, an image signal is input wirelessly using an electric wave or light, which is wireless means, and electric power for driving the display device is supplied using electromagnetic waves.

In Patent Document 1, however, the display device performs one-way reception of the image signal and does not perform transmission thereof. Therefore, there is a problem that the display device cannot feed back a setting, a display image, or the like which an operator desires, while an image signal transmitter set separately can.

In addition, an image signal transmitter can provide only one kind of image which is set by the image signal transmitter, and a plurality of display images cannot be provided at one time. Therefore, if there are a plurality of operators, the same number of image signal transmitters need to be prepared in order to provide settings, display images, and the like which each operator desires.

The present invention is made in view of the above problems, and provides a display device which does not need an input/output terminal such as an FPC or a cable for connecting to the display device and inputting an image signal to the display device directly, and can provide desired settings, display images, and the like.

A feature of the display device of the present invention is that it includes a display portion which rewrites and displays information; an antenna portion which transmits and receives a radio signal; a battery portion which converts the radio signal received in the antenna portion into electric power in order to transmit a request from an operator to received information to a data transmitting and receiving device, and retains and supplies the electric power required for driving each circuit; and a controller portion which converts the radio signal received in the antenna portion into an image signal to supply the image signal to the display portion, and converts a command for meeting the request from the operator into a radio signal and transmits the radio signal from the antenna portion to the data transmitting and receiving device; and a console portion to which the operator inputs the request.

The display device of the present invention can wirelessly receive a radio signal which is transmitted from a data transmitting and receiving device, and can display information. In addition, the display device of the present invention can receive desired information by transmitting a request from an operator to the data transmitting and receiving device and receiving a radio signal back from the data transmitting and receiving device.

The present invention increases a communication distance because a battery can be charged up with electric power when the display device utilizing the radio technology of the present invention is in an environment where it can receive a radio signal and the display device does not display an image, and the electric power stored in the battery is utilized in transmitting a radio signal to a data transmitting and receiving device from the display device.

Another feature of the display device utilizing the radio technology of the present invention is that it includes a display portion which rewrites and displays information, an antenna portion which transmits and receives a radio signal, a memory device portion which stores a command to transmit a request from an operator to received information to the data transmitting and receiving device, a battery portion which converts the radio signal received in the antenna portion into electric power and retains and supplies the electric power required for driving each circuit, a controller portion which converts the radio signal received in the antenna portion into an image signal to supply the image signal to the display portion, and converts a command for meeting the request from the operator into a radio signal and transmits the radio signal from the antenna portion to the data transmitting and receiving device, and a console portion to which the operator inputs the request; and the above components are formed over the identical substrate.

The present invention can reduce the number of components of a display device utilizing radio technology and can lower cost.

The present invention increases a range where display is possible even when the display device is at a distance where a display device has not been able to display an image due to a decrease of a signal according to an increase in a distance from a data transmitting and receiving device even if the display device is capable of receiving an radio signal.

The display device of the present invention can improve the reliability because it is free from degradation of an FPC, a disconnection of a cable, and the like since the display device of the present invention does not need an input/output terminal such as an FPC or a cable for connecting to the display device and inputting an image signal to the display device directly, and can operate using a radio signal.

In addition, the display device of the present invention can transmit a signal input from a console portion as a radio signal to the exterior. Accordingly, the display device can make an external image signal transmitter transfer a desired setting, a display image, and the like.

### BRIEF DESCRIPTION OF DRAWINGS

In the accompanying drawings:
FIG 1 is a diagram to illustrate a display device of the present invention;
FIG 2 is a diagram to illustrate a display device of the present invention;
FIG 3 is a diagram to illustrate a display device of the present invention;
FIG 4 is a diagram to illustrate a display device of the present invention;
FIG 5 is a diagram to illustrate a display device of the present invention;
FIG 6 is a diagram to illustrate a display device of the present invention;
FIG. 7 is a diagram to illustrate a display device of the present invention;
FIGS. 8A and 8B are diagrams to illustrate a display device of the present invention;
FIGS. 9A to 9C are diagrams to illustrate a display device of the present invention;
FIG 10 is a diagram to illustrate a display device of the present invention; and
FIGS. 11A to 11D are diagrams to illustrate a display device of the present invention.

### DETAILED DESCRIPTION OF THE INVENTION

### Embodiment Mode

Hereinafter, an embodiment mode and embodiments of the present invention are described with reference to the drawings. Note that the present invention can be performed in many different modes and it is easily understood by those skilled in the art that the modes and details disclosed herein can be modified in various ways without departing from the spirit and the scope of the present invention. Therefore, the present invention should not be interpreted as being limited to the description of the embodiment mode and embodiments to be given below. In all the drawings to illustrate the embodiment mode, the identical part or parts having similar functions are given the identical reference numeral, and repeated explanation thereof is omitted.

### (Embodiment Mode 1)

The display device of the present invention does not need an input/output terminal such as an FPC, a cable, or the like for connecting to the display device and inputting an image signal to the display device directly, and can operate using a radio signal. A structure of the display device of the present invention is explained hereinafter.

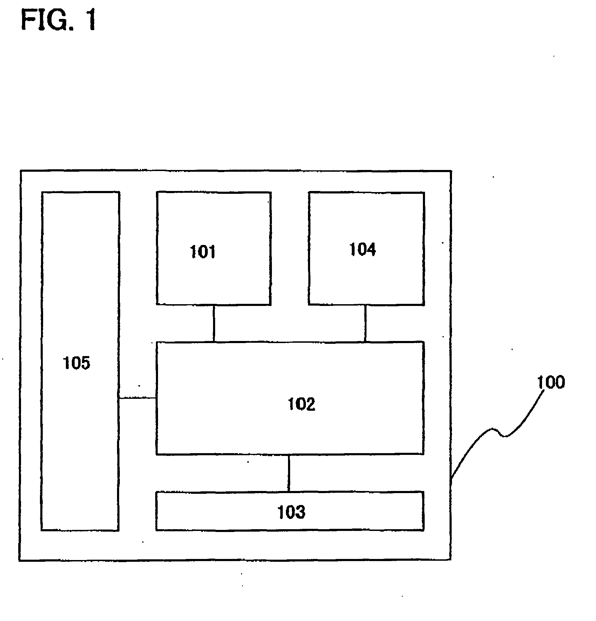

As shown in FIG 1, a display device 100 includes a display portion 101, a controller portion 102, an antenna portion 103, a battery portion 104, and a console portion 105.

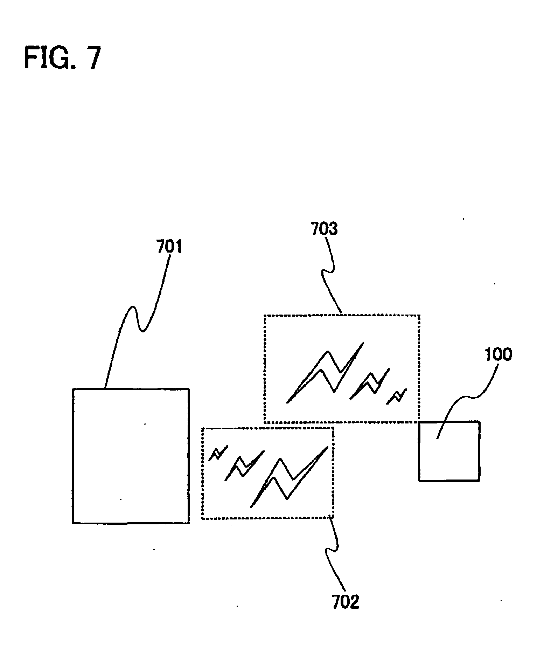

The display device 100 is supplied with a radio signal 702 from a data transmitting and receiving device 701, as shown in FIG 7. The display device 100 can be supplied with electric power and receive data by the radio signal 702 from the data transmitting and receiving device 701. The data transmitting and receiving device 701 receives a radio signal 703 which is transmitted from the display device 100 and transmits a radio signal according to the received signal.

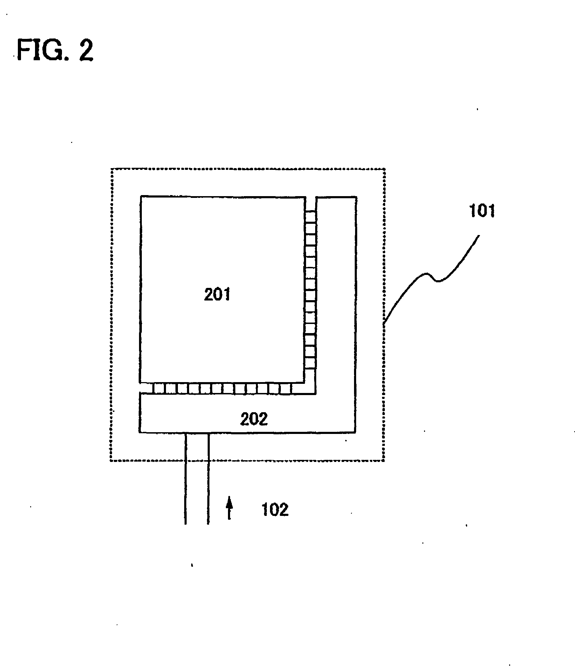

The display portion 101 in FIG. 1 is explained with reference to FIG. 2. The display portion 101 includes a display plane 201 in which display elements are arranged in a matrix, and a drive circuit 202 for displaying an image in the display plane 201. The display portion 101 processes an image signal which is input from the controller portion 102 in the drive circuit 202 using electric power output from batteries, and displays an image in the display plane 201.

For the display portion 101, an active-matrix display panel, which has an active element in a pixel, or a passive-matrix display panel, which does not have an active element in a pixel, can be used.

In an active-matrix display device, not only a transistor but also various active elements (non-linear elements) can be used for the active element (non-linear elements). For example, an MIM (metal insulator metal), a TFD (thin film diode), or the like can be used. These elements need a small number of production steps. Therefore, using these elements can reduce production costs and improve yields. In addition, using these elements can improve aperture ratio, reduce power consumption, and enhance luminance since the sizes of the elements are small.

In addition to an active-matrix display device, a passive-matrix display device, in which an active element (non-linear element) is not used, can also be used. The passive-matrix display device needs a small number of production steps since it does not include an active element (a non-linear element). In addition, production costs can be reduced and yields can be improved. Furthermore, aperture ratio can be improved, power consumption can be reduced, and luminance can be enhanced.

For a display element in the display portion, a display medium in which contrast, luminance, reflectance, transmittivity, and the like change by electromagnetic action, such as an EL element (an EL element which contains organic matter and inorganic matter, an organic EL element, or an inorganic EL element), an electron emitter, a liquid crystal element, electronic ink, an electrophoretic element, a grating light valve (GLV), a plasma display panel (PDP), a digital micromirror device (DMD), a piezoelectric ceramic display, or carbon nanotube can be used Examples of a display device utilizing the EL element include an EL display. Examples of a display device utilizing the electron emitter include a field emission display (FED) and an SED flat display (SED: surface-conduction electron-emitter display). Examples of a display device utilizing the liquid crystal element include a liquid crystal display (a transmissive liquid crystal display, a semi-transmissive liquid crystal display, a reflective liquid crystal display, a direct-view liquid crystal display, and a projection liquid crystal display). Examples of a display device utilizing electronic ink or an electrophoretic element include electronic paper.

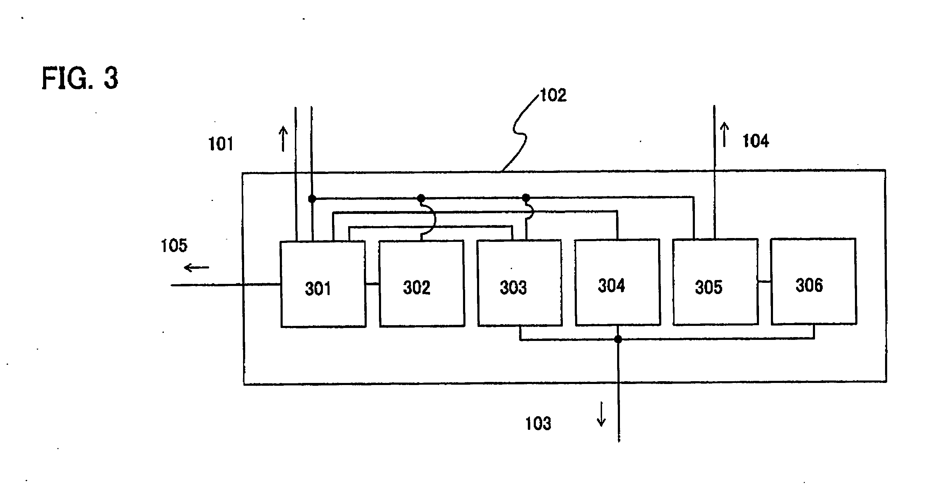

A configuration of the controller portion 102 in FIG 1 is explained with reference to FIG 3.

A process circuit 301 shown in FIG 3 processes a signal generated in the display device 100. A memory circuit 302 temporarily stores a signal generated in the display device 100.

A demodulation circuit 303 of the controller portion 102 shown in FIG 3 demodulates a radio signal received in the antenna portion 103 and outputs the demodulated signal to the process circuit 301. The demodulation circuit 303 is connected to the process circuit 301, the antenna portion 103, and a charge and discharge control circuit 305.

A modulation circuit 304 of the controller portion 102 shown in FIG 3 modulates a signal output from the process circuit 301 and transmits the modulated signal outside the display device 100 from the antenna portion 103. The modulation circuit 304 is connected to the process circuit 301 and the antenna portion 103.

A power supply generation circuit 306 shown in FIG. 3 generates power supply voltage to be electric power from a radio signal received in the antenna portion 103.

The charge and discharge control circuit 305 controls whether to supply the electric power generated in the power supply generation circuit 306 to each circuit including the battery portion 104. The charge and discharge control circuit 305 is connected to the power supply generation circuit 306, the battery portion 104, the drive circuit 202, the console portion 105, the process circuit 301, and the demodulation circuit 303.

The battery portion 104 in FIG 1 is explained. The battery portion 104 includes a battery, is charged with the electric power generated in the power supply generation circuit 306, and supplies the electric power to each circuit when necessary. Further, the communication distance when a radio signal is transmitted to the data transmitting and receiving device 701 from the display device 100 depends on electric power, and as the electric power becomes larger, the communication distance can be increased. Therefore, the battery portion 104 is preferable when a small amount of electric power is supplied through a radio signal. This embodiment mode explains a configuration in which the battery portion 104 is provided at one point. However, the battery portion 104 may be provided at a plurality of points. The battery portion 104 is connected to the charge and discharge control circuit 305.

In the present invention, the battery included in the battery portion denotes a power storage mean which can restore continuous use time by being charged. Examples of a power storage mean include a secondary battery and a capacitor, and power storage mean is generically referred to as a "battery" in this specification. It is preferable that the battery be in a sheet shape though it varies according to the usage. Downsizing can be achieved by using, for example, a lithium battery, preferably, a lithium polymer battery which utilizes gel-like electrolyte, a lithium ion battery, or the like. Needless to say, any batteries can be used as long as it is chargeable: a battery which can be charged and discharged, e.g., a nickel metal hydride battery, a nickel-cadmium battery, an organic radical battery, a lead-acid battery, an air secondary battery, a nickel-zinc battery, or a silver-zinc battery; a capacitor with a large capacity; or the like may be used.

It is desirable that the capacitor with a large capacity which can be used as a battery of the present invention have electrodes whose opposed areas are large. It is preferable to use an electric double layer capacitor in which an electrode material having a large specific surface area, e.g., activated carbon, fullerene, or carbon nanotube, is used. A capacitor has a simpler structure than that of a battery, can easily be made thin, and can easily be formed by stacking layers. The electric double layer capacitor is preferable since it has a function of storing electricity, does not deteriorate much even if it is charged and discharged a number of times, and is excellent in rapid charge property.

A structure of the controller portion 102 shown in FIG 3 is explained in detail. The controller portion 102 in FIG 3 includes the process circuit 301, the memory circuit 302, the demodulation circuit 303, the modulation circuit 304, the charge and discharge control circuit 305, and the power supply generation circuit 306.

The process circuit 301 processes output signals from the memory circuit 302, the console portion 105, and the demodulation circuit 303, and provides given output for each of the memory circuit 302, the modulation circuit 304, and the display portion 101. The process circuit 301 has a counter inside, and counts elapsed time from transmission of a radio signal from the display device 100, thereby carrying out a given process depending on whether a radio signal is transmitted from the data transmitting and receiving device 701 within a prescribed time. The process circuit 301 is connected to the console portion 105, the memory circuit 302, the drive circuit 202, the demodulation circuit 303, the modulation circuit 304, and the charge and discharge control circuit 305.

The memory circuit 302 has a function of storing a signal to be transmitted to the exterior and outputting the signal according to given input, and a function of storing a particular image signal which can be displayed in the display portion 101 and outputting the image signal according to given input. The memory circuit 302 is connected to the process circuit 301 and the charge and discharge control circuit 305.

The console portion 105 has a function by which an operator operates the display device 100, converts the operation into an electric signal, and outputs the electric signal. The console portion 105 is connected to the process circuit 301 and the charge and discharge control circuit 305.

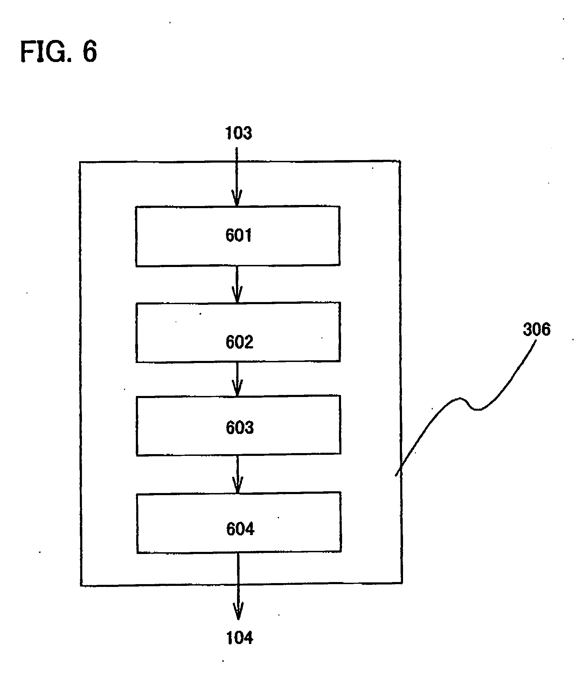

The power supply generation circuit 306 generates electric power from the radio signal which is received via the antenna portion 103. The power supply generation circuit 306 charges the battery portion 104 with the electric power when the radio signal which is received via the antenna portion 103 is input and an operation of each circuit is halted. Further, the power supply generation circuit 306 charges each circuit with the electric power when the radio signal which is received via the antenna portion 103 is input and each circuit is operated. For example, the power supply generation circuit 306 may include a rectifying circuit 601, a constant voltage regulating circuit 602, a constant current regulating circuit 603, and a diode 604, as shown in FIG 6. The structure of the power supply generation circuit 306 is not limited to the above because the structure varies according to an application range or use. The power supply generation circuit 306 is connected to the charge and discharge control circuit 305 and the antenna portion 103.

The antenna portion 103 in FIG 1 may include an antenna or a combination of antennas with a plurality of forms. The antenna portion 103 is connected to the power supply generation circuit 306, the demodulation circuit 303, and the modulation circuit 304.

The form of the antenna of the antenna portion 103 is not particularly limited. That is to say, a signal applied to the antenna portion 103 of the display device 100 can be transmitted by an electromagnetic coupling method, an electromagnetic induction method, a microwave method, or the like. A transmission method may appropriately be selected in consideration of the use, and an antenna having an appropriate length or an appropriate form may be provided according to the transmission method.

For example, if the electromagnetic coupling method or the electromagnetic induction method (e.g., 1356 MHz band) is applied as the transmission method, a conductive film which functions as the antenna is formed into a circular form (e.g., a loop antenna) or a spiral form (e.g., a spiral antenna) because of utilizing electromagnetic induction caused by a change in electric field density. Further, the antenna may be selected from a loop antenna, a dipole antenna, a slot antenna, a monopole antenna, a notch antenna, a patch antenna, and the like.

If the microwave method (e.g., UHF band (860 to 960 MHz), 2.45 GHz band, or the like) is applied as the transmission method, a conductive film which functions as the antenna may be formed to have an appropriate length or an appropriate form in consideration of a wavelength of a radio signal used for signal transmission. For example, the conductive film which functions as the antenna may be formed into a linear form (e.g., a dipole antenna), a planar form (e.g., a patch antenna), or the like. Further, the form of the conductive film which functions as the antenna is not limited to the linear form, and may be a curve form, a meander form, or a form in which these are combined, in consideration of a wavelength of the electromagnetic waves.

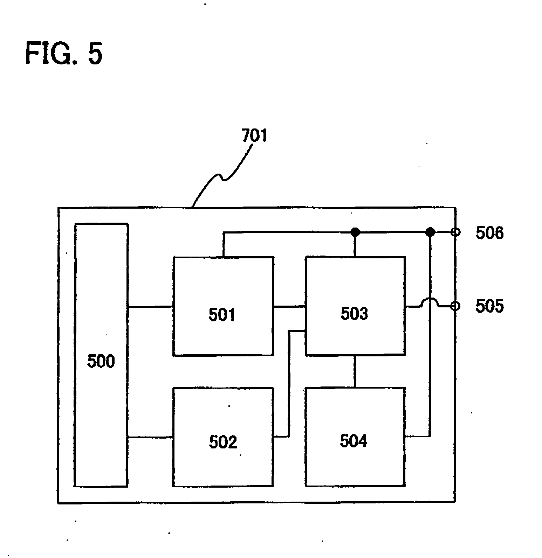

A structure of the data transmitting and receiving device 701 shown in FIG. 7 is explained in detail with reference to FIG 5. The data transmitting and receiving device 701 shown in FIG 5 has an antenna, is a medium capable of transmitting and receiving information through a radio signal, and can carry out a process of analyzing a transmitted or received signal.

The data transmitting and receiving device 701 shown in FIG 5 includes an antenna portion 500, a demodulation circuit 501, a modulation circuit 502, a central processing unit 503, a memory device 504, an external connecting terminal 505, and a power supply terminal 506.

For the antenna portion 500 in FIG 5, either an electric field antenna or a magnetic field antenna, or a combination of these can be used. The antenna portion 500 is connected to the demodulation circuit 501 and the modulation circuit 502.

The demodulation circuit 501 demodulates a radio signal received in the antenna portion 500, and outputs the demodulated signal to the central processing unit 503. The demodulation circuit 501 is connected to the central processing unit 503, the antenna portion 103, the antenna portion 500, and the power supply terminal 506.

The modulation circuit 502 modulates a signal output from the central processing unit 503, and transmits the modulated signal from the antenna portion 500 to the display device 100. The modulation circuit 502 is connected to the central processing unit 503 and the antenna portion 500.

The central processing unit 503 processes output signals from the external connecting terminal 505, the memory device 504, and the demodulation circuit 501, and provides output for the memory device 504 and the modulation circuit 502. The central processing unit 503 is connected to the power supply terminal 506, the memory device 504, the external connecting terminal 505, the demodulation circuit 501, and the modulation circuit 502.

The memory device 504 stores an image signal to be transmitted to the exterior, and has a function of outputting the image signal according to given input. The memory device 504 is connected to the central processing unit 503 and the power supply terminal 506.

The external connecting terminal 505 is connected to a control system such as a computer, a data server, or the like, and carries out a provision of an image signal for the data transmitting and receiving device 701, a setting of the data transmitting and receiving device 701, and the like. The external connecting terminal 505 is connected to the central processing unit 503. The external connecting terminal 505 may be omitted when the data transmitting and receiving device 701 is connected to a computer, a data server, or the like through a radio signal. In such a case, a demodulation circuit and a modulation circuit need to be provided additionally.

The power supply terminal 506 is connected to an external power supply in order to supply electric power to the data transmitting and receiving device 701. The power supply terminal 506 may be provided with a switch for turning on and off the data transmitting and receiving device 701. The power supply terminal 506 is connected to the demodulation circuit 501, the central processing unit 503, and the memory device 504 inside the data transmitting and receiving device 701, and to the external power supply outside the data transmitting and receiving device 701.

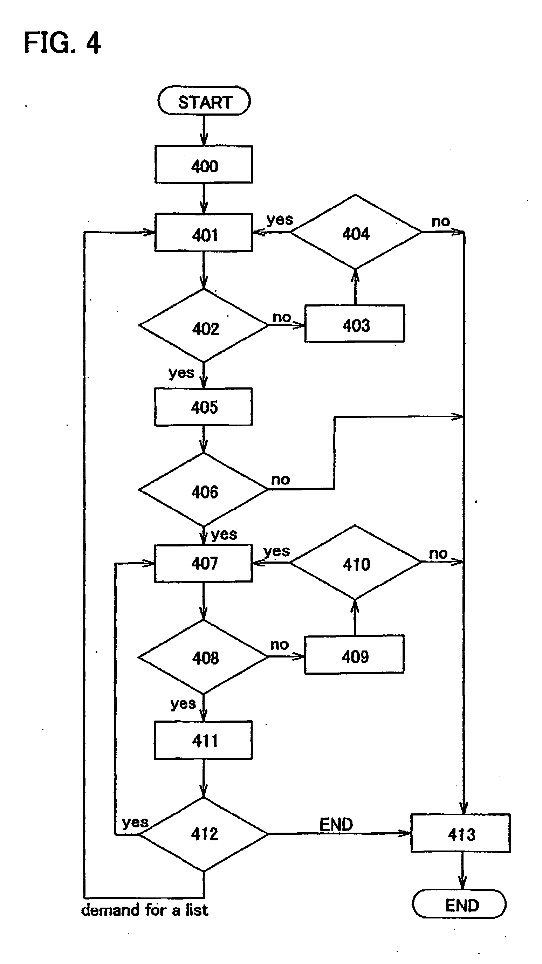

An operation of the display device of the present invention shown in FIG 1 is explained with reference to a flowchart shown in FIG. 4.

First, an operator operates the console portion 105 of the display device 100, thereby starting up the display device 100 (a step 400). The process circuit 301 of the controller portion 102 reads out an image signal of "an image to be displayed in starting up" from the memory circuit 302, outputs the image signal to the drive circuit 202 of the display portion 101, and makes an image displayed in the display plane 201. And then a process goes on to a step 401.

Next, the process circuit 301 selects and reads out a command signal of "a demand for a list of contents which can be displayed" from the memory circuit 302 and outputs the command signal to the modulation circuit 304 (the step 401). The modulation circuit 304 modulates the command signal which is input from the process circuit 301, thereby converting the command signal into a radio signal, and transmits the radio signal to the data transmitting and receiving device 701 via the antenna portion 103. And then the process goes on to a step 402.

Next, when the radio signal is transmitted from the display device 100, the counter inside the process circuit 301 starts operating (the step 402). The counter synchronizes the time from the transmission. It is judged whether there is the data transmitting and receiving device 701 capable of receiving the radio signal depending on whether the radio signal is transmitted from the data transmitting and receiving device 701 within a prescribed time. If the counter inside the process circuit 301 reaches a prescribed value and the radio signal is not transmitted from the data transmitting and receiving device 701, or if the antenna portion 103 was not able to receive the radio signal transmitted from the data transmitting and receiving device 701, the process goes on to a step 403. In the step 402, if the radio signal transmitted from the data transmitting and receiving device 701 is received by the antenna portion 103 before the counter inside the process circuit 301 reaches the prescribed value, the process goes on to a step 405.

If the counter inside the process circuit 301 reaches the prescribed value and the radio signal is not transmitted from the data transmitting and receiving device 701, communication is judged to be time-out. And then an image signal for time-out is read out of the memory circuit 302 and is output to the drive circuit 202 of the display portion 101, and an image is displayed in the display plane 201 (the step 403). Next, the process goes on to a step 404.

An image telling communication time-out is displayed in the display plane 201 of the display portion 101, and then an option saying "try communicating again?" is shown to the operator (the step 404). In the step 404, if the operator selects "to exit" by operating the console portion 105, the process goes on to a step 413. If the operator selects "to try communicating again" by operating the console portion 105, the process returns to the step 401.

Next, the radio signal from the display device 100 is received by the antenna portion 500 of the data transmitting and receiving device 701. The received radio signal is demodulated in the demodulation circuit 501, and a command is analyzed and processed in the central processing unit 503. Then information of "a list of contents which can be provided by the data transmitting and receiving device 701" which is demanded by the display device 100 is collected from a computer, a data server, or the like that is connected to the exterior of the data transmitting and receiving device 701, via the memory device 504 or the external connecting terminal 505. And then an image signal for being transmitted is formed in the central processing unit 503 and modulated in the modulation circuit 502, thereby being converted into a radio signal. And the radio signal is transmitted to the display device 100 via the antenna portion 500. Then the radio signal which includes data about the image signal is received by the antenna portion 103. The radio signal received by the antenna portion 103 is input into the demodulation circuit 303 and the power supply generation circuit 306. The radio signal input into the power supply generation circuit 306 is converted into electric power, and the electric power is supplied to each circuit. The radio signal input into the demodulation circuit 303 is demodulated, and the demodulated signal is input into the process circuit 301. The signal input into the process circuit 301 is analyzed, converted into an image signal, and output to the drive circuit 202 of the display portion 101. Then an image is displayed in the display plane 201 (the step 405). Next, the process goes on to a step 406.

The list of contents which can be provided by the data transmitting and receiving device 701 is displayed in the display plane 201 of the display portion 101, and further, an option saying "which contents do you select?" is shown to the operator (the step 406). Here, if the operator selects "to exit" by operating the console portion 105, the process goes on to the step 413. If the operator selects desired contents by operating the console portion 105, the process goes on to a step 407.

The process circuit 301 selects and reads out a command signal of "demand for the selected contents" from the memory circuit 302, and outputs the command signal to the modulation circuit 304 (the step 407). The modulation circuit 304 modulates the command signal input from the process circuit 301, thereby converting the command signal into a radio signal, and transmits the radio signal to the data transmitting and receiving device 701 via the antenna portion 103. Next, the process goes on to a step 408.

When the radio signal is output from the display device 100, the counter inside the process circuit 301 starts operating (the step 408). The counter synchronizes the time from the transmission. It is judged whether there is the data transmitting and receiving device 701 capable of receiving the radio signal depending on whether the radio signal is transmitted from the data transmitting and receiving device 701 within a prescribed time. If the counter inside the process circuit 301 reaches the prescribed value and the radio signal is not transmitted from the data transmitting and receiving device 701, or if the antenna portion 103 has not been able to receive the transmitted radio signal, the process goes on to a step 409. If the radio signal transmitted from the data transmitting and receiving device 701 is received by the antenna portion 103 before the counter inside the process circuit 301 reaches the prescribed value, the process goes on to a step 411.

If the counter inside the process circuit 301 reaches the prescribed value and the radio signal is not transmitted from the data transmitting and receiving device 701, communication is judged to be time-out. And then an image signal for time-out is read out of the memory circuit 302 and is output to the drive circuit 202 of the display portion 101, and an image is displayed in the display plane 201 (the step 409). Next, the process goes on to a step 410.

An image telling communication time-out is displayed in the display plane 201 of the display portion 101, and then an option saying "try communicating again?" is shown to the operator (the step 410). Here, if the operator selects "to exit" by operating the console portion 105, the process goes on to the step 413. If the operator selects "to try communicating again" by operating the console portion 105, the process goes on to the step 407.

Next, the radio signal from the display device 100 is received by the antenna portion 500 of the data transmitting and receiving device 701. The received radio signal is demodulated in the demodulation circuit 501, and a command is analyzed and processed in the central processing unit 503. Then information of the "desired contents" which is demanded by the display device 100 is collected from a computer, a data server, or the like that is connected to the exterior of the data transmitting and receiving device 701, via the memory device 504 or the external connecting terminal 505. And then an image signal of the "desired contents" is formed in the central processing unit 503 and modulated in the modulation circuit 502, thereby being converted into a radio signal. And the radio signal is transmitted to the display device 100 via the antenna portion 500. Then the radio signal which includes data about the image signal and is transmitted from the data transmitting and receiving device 701 is received by the antenna portion 103. The radio signal received by the antenna portion 103 is input into the demodulation circuit 303 and the power supply generation circuit 306. The radio signal input into the power supply generation circuit 306 is converted into electric power, and the electric power is supplied to each circuit. The radio signal input into the demodulation circuit 303 is demodulated, and the demodulated signal is input into the process circuit 301. The signal input into the process circuit 301 is analyzed, converted into an image signal, and output to the drive circuit 202 of the display portion 101. Then an image is displayed in the display plane 201 (the step 411). Next, the process goes on to a step 412.

The contents demanded by the operator are displayed in the display plane 201 of the display portion 101, and further, an option saying "what's next?" is shown to the operator (the step 412). Here, if the operator selects "to exit" by operating the console portion 105, the process goes on to the step 413. If the operator selects desired contents by operating the console portion 105, the process goes on to the step 407.

Next, the process circuit 301 reads out an image signal of "an image to be displayed in terminating a system" from the memory circuit 302 and outputs the image signal to the drive circuit 202 of the display portion 101. Then an image is displayed in the display plane 201 (the step 413). After displaying the image for a given length of time, a display terminating process of the display portion 101 is carried out, thereby terminating the operation of the display portion 101. In the step 413, when the battery portion 104 is not charged enough, the charge and discharge control circuit 305 starts charging the battery portion 104 and halts supplying electric power to other circuits. When the battery portion 104 is charged up, the charge and discharge control circuit 305 halts supplying electric power from the power supply generation circuit 306.

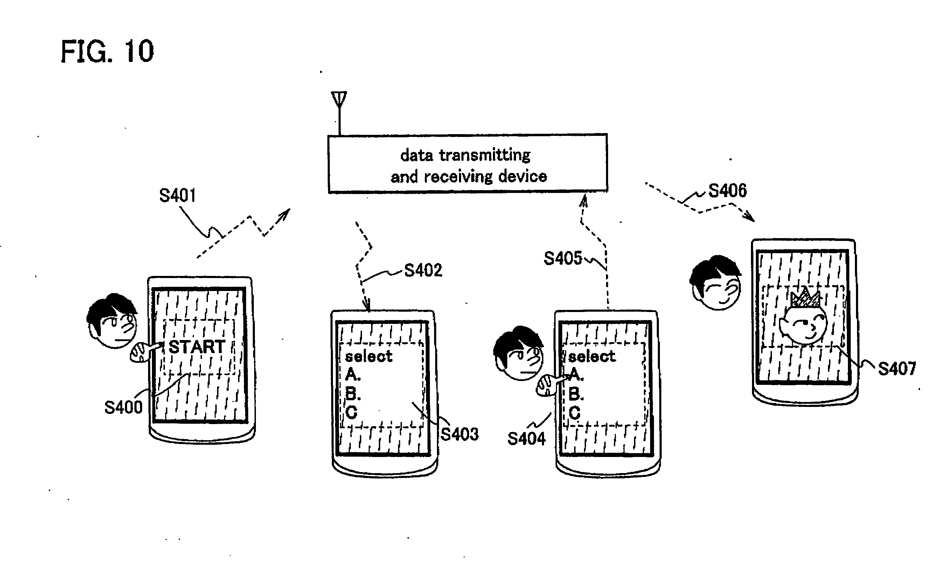

A flow from starting up a display device to acquiring contents when communication between the display device and a data transmitting and receiving device is favorable in the flowchart explained with reference to FIG. 4 is explained with reference to FIG. 10. With reference to FIG. 10, in particular, a flow of a process between the display device and the data transmitting and receiving device is explained in detail.

First, an operator operates the display device, thereby starting up the display device (a display S400 of a starting-up process). Next, the display device outputs a command signal of "a demand for a list of contents which can be displayed" to the data transmitting and receiving device (a radio signal S401 for demanding the list).

Next, the data transmitting and receiving device transmits data about "the list of the contents which can be displayed" to the display device (a radio signal S402 for transmitting the list). The display device shows a display about the received "list of the contents which can be displayed" (a display S403 of the list of the contents).

Next, the operator selects desired contents from "the list of the contents which can be displayed" by operating the display device (selection S404 of the contents). And then the display device outputs a command signal of "a demand for the selected contents" to the data transmitting and receiving device (a radio signal S405 for demanding the contents).

Next, the data transmitting and receiving device transmits data about "the selected contents" to the display device (a radio signal S406 for transmitting the contents). The display device shows a display about a received "list of the selected contents" (a display S407 of the contents).

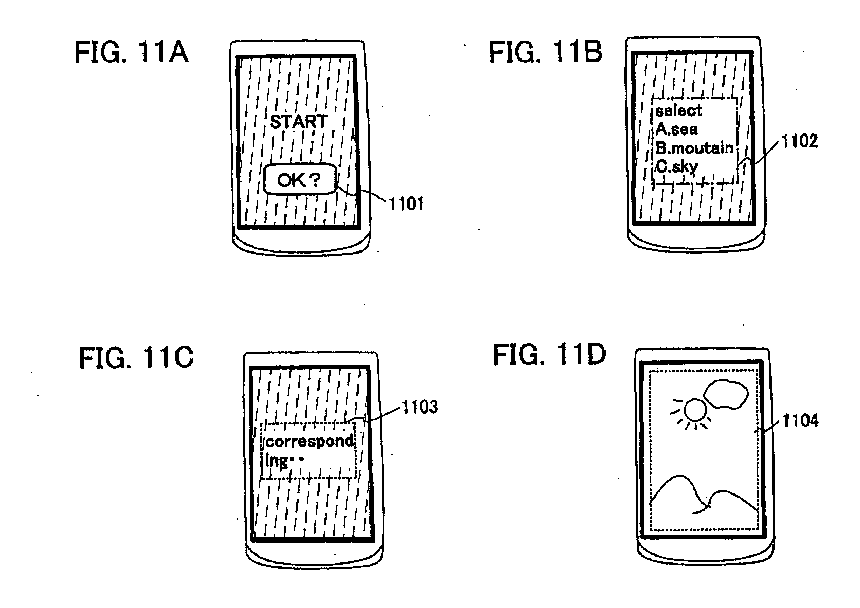

An example of an image displayed in a display plane of the display device is explained with reference to FIGS. 11A to 11 D. The image in the display plane of the display device shown in FIG 11A corresponds to a process screen of the "starting-up process" in the above flowchart or FIG 10. In FIG 11A, when the "starting-up process" is to be carried out, a diagram 1101 is selected and transmission and reception with a data transmitting and receiving device is started. An image in the display plane of the display device shown in FIG 11B corresponds to a process screen of the "display of the list" in the above flowchart or FIG. 10. In FIG 11B, when the "display of the list" is to be carried out, any option in a diagram 1102 is selected and transmission to the data transmitting and receiving device is started. An image in the display plane of the display device shown in FIG 11C corresponds to a process screen of the data transmission or reception in the above flowchart or FIG 10. In FIG 11C, a diagram 1103 is displayed in the display plane of the display device for a prescribed time, i.e., until a response to a signal transmitted to the data transmitting and receiving device by the display device comes from the data transmitting and receiving device. An image in the display plane of the display device shown in FIG 11D corresponds to a process screen of the "display of the contents" in the above flowchart or FIG 10. In FIG 11D, when the "display of the contents" is to be carried out, an image of desired contents is displayed like a diagram 1104.

As explained above, employing the display device of the present invention which can transmit and receive a signal to/from the data transmitting and receiving device enables feedback of a demand of an operator of the display device. In addition, increase of a distance in which a radio signal can be transmitted from the display device to the data transmitting and receiving device can be realized because the display device of the present invention can obtain image data and electric power for charging the battery. The display device of the present invention can transmit a signal input from the console portion as a radio signal to the exterior. Accordingly, the display device can make an external image signal transmitter transfer a desired setting, display image, and the like.

Further, circuits which constitute the display device of the present invention can be formed over the identical substrate. Therefore, a process is common, and thus, cost and the number of parts can be reduced. In particular, the display device of the present invention does not need an input/output terminal such as an FPC, a cable, or the like for connecting to the display device and inputting an image signal to the display device directly, and can operate using a radio signal. Therefore, the display device of the present invention can improve the reliability because it is free from degradation of an FPC, a disconnection of a cable, and the like.

Concretely, various transistors can be employed for transistors which constitute each circuit in the present invention, and the transistors can be formed over various substrates. Therefore, all the circuits can be formed over the identical substrate. For example, all the circuits necessary to realize prescribed functions can be formed over a glass substrate, a plastic substrate, a single crystalline substrate, or an SOI substrate. Therefore, cost can be reduced due to the reduction of the number of the parts.

In forming the circuits which constitute the display device of the present invention over the identical substrate, it is preferable to form the circuits which constitute the display device of the present invention over a flexible plastic substrate. Employing a flexible substrate can facilitate attachment to an article having a curved surface.

In the present invention, the console portion may be provided separately from circuits formed over the substrate because an operator inputs directly into the console portion. Even when a part of the components of the present invention is formed outside the substrate, cost can be reduced due to the reduction of the number of the parts since most parts of the components which constitute the circuits are formed over the identical substrate. Examples of the console portion include an operation button, an operation key, a touch panel utilizing a photosensor or the like, a sensor which senses an external environment, and the like.

For transistors formed over the identical substrate in the present invention, various types of transistors can be used. Therefore, the kind of the transistors to be used is not limited. For example, a thin film transistor (TFT) having a non-single crystalline semiconductor film typified by an amorphous silicon film, a polycrystalline silicon film, a microcrystalline (also referred to as "semiamorphous") silicon film, or the like can be used. There are various merits in using such a TFT. For example, production cost can be reduced and production apparatus can be upsized because such a TFT can be made at lower temperature compared with a TFT in which single crystalline silicon is used. Further, such a TFT can be made over a large substrate because the production apparatus can be upsized. Therefore, a large number of display devices can be manufactured at the same time, and thus can be manufactured at a low cost. Furthermore, a substrate with low beat-resistance can be used because a manufacturing temperature is low. Therefore, a transistor can be made over a transparent substrate, and transmission of light through a display element can be controlled using the transistor over the transparent substrate. Otherwise, since the transistor has a thin film thickness, a part of a film which constitutes the transistor can transmit light. Consequently, aperture ratio can be improved.

Using a medium (e.g., nickel) in making polycrystalline silicon improves crystallinity and enables production of a transistor having a good electric property. As a result, a drive circuit such as a gate driver circuit (a scanning line drive circuit) or a source driver circuit (a signal line drive circuit) and a controller portion can be formed integrally over a substrate.

Using a catalyst (e.g., nickel) in making microcrystalline silicon improves crystallinity and enables production of a transistor having a good electric property. In this time, the crystallinity can be improved only by heat treatment without using a laser. As a result, a part of a gate driver circuit (a scanning line drive circuit) and a source driver circuit (e.g., an analog switch) can be formed integrally over a substrate. Further, if a laser is not used for crystallizing, variation in crystallinity of silicon can be suppressed. Consequently, a fine image in a display plane can be displayed.

It is also possible to make polycrystalline silicon or microcrystalline silicon without using a catalyst (e.g., nickel).

Further, a transistor can also be made using a semiconductor substrate or an SOI substrate. Using a semiconductor substrate or an SOI substrate enables production of a transistor with small variation in characteristics, size, shape, and the like, and having high current supply capability and a small size. Using such a transistor can reduce power consumption and achieve high integration of circuits.

Alternatively, a transistor having a compound semiconductor or an oxide semiconductor such as ZnO, a-InGaZnO, SiGe, GaAs, IZO, ITO, or SnO, or a thin film transistor formed by thinning the compound semiconductors or the oxide semiconductors can also be used. Accordingly, production temperature can be lowered: for example, transistors can be manufactured at room temperature. Consequently, it becomes possible to form a transistor directly on a substrate with low heat-resistance, e.g., a plastic substrate or a film substrate. These compound semiconductors or oxide semiconductors can also be used for other uses than a channel portion of a transistor. For example, these compound semiconductors or oxide semiconductors can be used for a resistive element, a pixel electrode, or a transparent electrode. Further, since these can be formed at the same time as a transistor, cost can be reduced.

Alternatively, a transistor formed using an inkjet method or a printing method can be used. Accordingly, the transistor can be made at room temperature, in a low vacuum, or over a large substrate. Further, because production becomes possible even without a mask (retide), a layout of the transistor can easily be changed. Furthermore, because a resist is not necessary, a material cost can be reduced and the number of steps can be reduced. Still furthermore, because a film is provided only for a portion which needs the film, a material is not wasted and lower cost can be accomplished compared with a production method in which a film is formed and then etched.

Alternatively, a transistor having an organic semiconductor or carbon nanotube, or the like can be used. Accordingly, the transistor can be formed over a bendable substrate. Consequently, the transistor can be impact-resistant.

Furthermore, the display device of the present invention can employ transistors with various structures. For example, a MOS transistor, a junction transistor, a bipolar transistor, or the like can be used for the transistor in the present invention. Using a MOS transistor enables reducing the size of the transistor. Accordingly, a number of transistors can be mounted. Using a bipolar transistor enables a large amount of current to flow. Accordingly, a circuit can operate at high speed.

The MOS transistor, the bipolar transistor, and the like can be mixed over one substrate. Accordingly, low power consumption, downsizing, high-speed operation, and the like can be realized.

The substrate over which the transistor constituting each circuit of the display device of the present invention is formed can employ various kinds, and is not limited to a certain kind. Examples of the substrate over which the transistor is formed include a sinee-crystalline substrate, an SOI substrate, a glass substrate, a quartz substrate, a plastic substrate, a paper substrate, a cellophane substrate, a stone substrate, a wood substrate, a cloth substrate (including natural fiber (silk, cotton, or hemp), synthetic fiber (nylon, polyurethane, or polyester), regenerated fiber (acetate, cupra, rayon, or regenerated polyester), or the like), a leather substrate, a rubber substrate, a stainless steel substrate, and a substrate having stainless steel foil. Alternatively, a skin (an epidermis or a corium) or hypodermis of an animal such as a human may be used as a substrate. Still alternatively, a transistor may be formed over a certain substrate and then the transistor may be transposed to another substrate. Examples of the substrate to which the transistor is transposed include a single-crystalline substrate, an SOI substrate, a glass substrate, a quartz substrate, a plastic substrate, a paper substrate, a cellophane substrate, a stone substrate, a wood substrate, a cloth substrate (including natural fiber (silk, cotton, or hemp), synthetic fiber (nylon, polyurethane, or polyester), regenerated fiber (acetate, cupra, rayon, or regenerated polyester), or the like), a leather substrate, a rubber substrate, a stainless steel substrate, a substrate having stainless steel foil, and the like. Alternatively, a skin (an epidermis or a corium) or hypodermis of an animal such as a human may be used as a substrate. Still alternatively, a transistor may be formed over a certain substrate and the substrate may be ground to be thin. Examples of the substrate to be ground include a single-crystalline substrate, an SOI substrate, a glass substrate, a quartz substrate, a plastic substrate, a paper substrate, a cellophane substrate, a stone substrate, a wood substrate, a cloth substrate (natural fiber (silk, cotton, or hemp), synthetic fiber (nylon, polyurethane, or polyester), regenerated fiber (acetate, cupra, rayon, or regenerated polyester), or the like), a leather substrate, a rubber substrate, a stainless steel substrate, a substrate containing stainless steel foil, and the like. Alternatively, a skin (an epidermis or a corium) or hypodermis of an animal such as a human can be used as a substrate. Using such a substrate enables forming a transistor with good properties, forming a transistor with low power consumption, production of a device which does not break easily, providing heat-resistance, reduction in weight, or reduction in thickness.

The transistor which constitutes each circuit of the display device of the present invention can employ various structures and is not limited to a certain structure. For example, a multigate structure, which includes two or more gate electrodes, can be employed. If the multigate structure is employed, channel regions are connected in series, and thus a plurality of transistors are connected in series. Employing the multigate structure enables lowering an off-current and improving reliability due to improvement in pressure-resistance of the transistor. Further, when the multigate structure is employed, current between a source and drain is prevented from varying and a characteristic that a slope of voltage-current characteristics is flat can be obtained even if voltage between the source and drain changes when the transistor operates in a saturation region. Utilizing the characteristic that the slope of the voltage/current characteristic is flat enables realizing an ideal current source circuit or an active load having an extremely high resistance value. As a result, a differential circuit or a current mirror circuit with good properties can be realized. Furthermore, a structure in which gate electrodes are provided above and below a channel may be employed. Employing the structure in which gate electrodes are provided above and below a channel enlarges a channel region, whereby a current value increases or a depiction layer can be easily formed to decrease an S value. When the gate electrodes are formed above and below the channel, a structure in which a plurality of transistors are connected in parallel is provided.

Further, a structure in which a gate electrode is formed above a channel region or a structure in which a gate electrode is formed below a channel region may be employed. Furthermore, a staggered structure, an inversely staggered structure, a structure in which a channel region is divided into a plurality of regions, or a structure in which channel regions are connected in parallel or in series may be employed. Still furthermore, a source electrode or a drain electrode may overlap with a channel region (or part of it). Employing the structure in which the source electrode or the drain electrode overlaps with the channel region (or part of it) can prevent an unstable operation due to accumulation of electric charges in part of the channel region. Still furthermore, an LDD region may be provided. Provision of the LDD region enables lowering an off-current and improving reliability due to improvement in pressure-resistance of the transistor. Further, by provision of the LDD region, current between a source and drain is prevented from varying and a characteristic that a slope of voltage-current characteristics is flat can be obtained even if voltage between the source and the drain changes when the transistor operates in a saturation region.

As explained above, circuits which constitute the display device of the present invention can be formed over the identical substrate. Therefore, the process is common, which enables reduction of cost or the number of parts. In particular, the display device of the present invention does not need an input/output terminal such as an FPC or a cable for connecting to the display device and inputting an image signal to the display device directly, and can operate using a radio signal, so that the display device of the present invention is free from degradation of an FPC, a disconnection of a cable, and the like and can improve the reliability.

### [Embodiment 1]

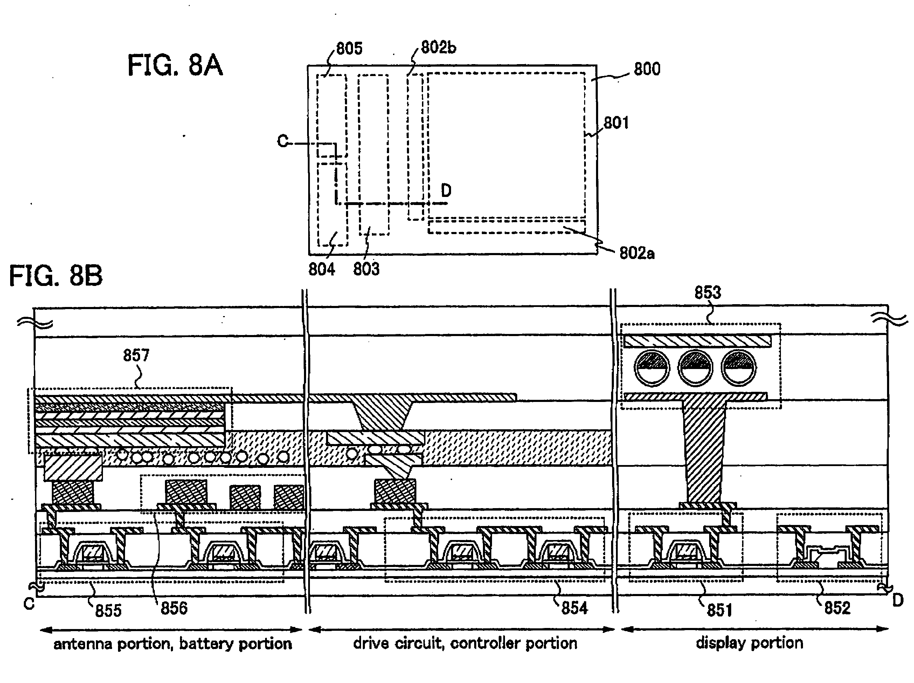

This embodiment explains an example when each circuit which constitutes the display device of the present invention explained in the above embodiment mode is formed over the identical substrate. Although this embodiment explains a case where the structure of the display device is an active matrix type, the present invention can also be applied to a passive matrix structure. As an example, this embodiment explains a display device in which an electrophoretic display element, so-called electronic paper is used for a display element, with reference to a top view (FIG 8A) and a cross-sectional view (FIG. 8B).

As shown in FIG 8A, a display portion 801, a drive circuit region 802a which is a scanning line drive region, a drive circuit region 802b which is a signal line drive region, a controller portion 803, a battery portion 804, and an antenna portion 805 are provided over a substrate 800. In this embodiment, the display portion 801 is explained as a display portion of a touchscreen type, in which the console portion and the display portion in the above embodiment mode are formed integrally. A transistor and a photodiode are provided for the display portion 801; a drive circuit having a transistor is provided for the drive circuit regions 802a and 802b; a logic circuit having a transistor is provided for the controller portion 803; a secondary battery, which can be charged and discharged repeatedly, is provided for the battery portion 804; and an antenna for receiving a radio signal is provided for the antenna portion 805. Each circuit provided over the identical substrate is not provided for a limited position, and can be provided overlapping with each other over the substrate. Consequently, the display device can be downsized. In providing a plurality of circuits in an overlapped manner, the circuits of two or more of the components of the present invention may overlap with each other.

The insulating substrate which is the same as the above embodiment mode can be applied to the substrate 800. Although there is concern that a substrate formed of a synthetic resin in general has a low heat-resistant temperature compared with other substrates, the substrate formed of a synthetic resin can be employed by utilizing transposition after a production step using a high heat-resistant substrate.

FIG. 8B illustrates each element divided into the display portion, the drive circuit and the controller portion, and the battery portion and the antenna portion shown in FIG. 8A. The display portion in FIG. 8B includes a transistor 851 which includes a gate electrode layer, a gate insulating layer, a semiconductor layer including a source region, a drain region, and a channel formation region, and a wiring layer to be connected to the source region and the drain region. Further, the display portion in FIG. 8B includes a photodiode 852 which includes an n-type semiconductor layer, a photoelectric conversion layer, a p-type semiconductor layer, and a wiring layer for a sensor. Furthermore, the display portion in FIG. 8B includes an electrophoretic element 853 which includes an electrode layer on a substrate side over which the transistor is provided, an electrode layer on an opposite substrate side, and a microcapsule interposed therebetween.

The drive circuit and the controller portion in FIG 8B include a transistor 854 which includes a gate electrode layer, a gate insulating layer, a semiconductor layer including a source region, a drain region, and a channel formation region, and a wiring layer to be connected to the source region and the drain region.

The battery portion and the antenna portion in FIG. 8B include a transistor 855 which includes a gate electrode layer, a gate insulating layer, a semiconductor layer including a source region, a drain region, and a channel formation region, and a wiring layer to be connected to the source region and the drain region. Further, the battery portion and the antenna portion in FIG. 8B include an antenna 856 which includes a conductive layer. Furthermore, the battery portion and the antenna portion in FIG. 8B include a thin film secondary battery 857 which is formed by sequentially stacking a current-collecting thin film, a negative electrode active material layer, a solid electrolyte layer, a positive electrode active material layer, and a current-collecting thin film. The battery portion and the antenna portion can be provided overlapping partly with each other, whereby the display device can be downsized.

The semiconductor layer can be formed using the following material: an amorphous semiconductor (hereinafter also referred to as an "AS") which is made by a vapor-phase growth method using a semiconductor material gas typified by silane or germane, or a sputtering method; a polycrystalline semiconductor which is formed by crystallizing the amorphous semiconductor by utilizing light energy or thermal energy; a semiamorphous (also referred to as. "microcrystal") semiconductor (hereinafter also referred to as a "SAS"); or the like.

The SAS is a semiconductor having an intermediate structure of an amorphous structure and a crystalline structure (including a single crystal and a polycrystal) and having a third state, which is stable in terms of free energy, and includes a crystalline region having short-range order and lattice distortion. The SAS is formed by glow discharge decomposition (plasma CVD) of a gas containing silicon. SiH₄, Si₂H₆, SiH₂Cl₂, SiHCl₃, SiCl₄, SiF₄, or the like can be used for the gas containing silicon. Further, F₂ or GeF₄ may be mixed. The gas containing silicon may be diluted with H₂, or H₂ and one or more rare gas elements of He, Ar, Kr, and Ne. Moreover, through further promotion of lattice distortion by adding a rare gas element such as helium, argon, crypton, or neon, a favorable SAS with increased stability can be obtained. The semiconductor layer may be formed by stacking an SAS layer formed from a fluorine-based gas and an SAS layer formed from a hydrogen-based gas.

Typical examples of the amorphous semiconductor include hydrogenated amorphous silicon, and typical examples of the crystalline semiconductor include polysilicon. Examples of polysilicon (polycrystalline silicon) include so-called high-temperature polysilicon, which contains polysilicon formed at a process temperature of 800°C or higher as a main component, so-called low-temperature polysilicon, which contains polysilicon formed at a process temperature of 600°C or lower as a main component, and polysilicon which is formed by crystallizing amorphous silicon by using, for example, an element which promotes crystallization. Needless to say, as described above, a semiamorphous semiconductor, or a semiconductor which includes a crystalline phase in a part can also be used.

When a crystalline semiconductor film is used for the semiconductor layer, the crystalline semiconductor film may be made by a known method (e.g., a laser crystallization method, a thermal crystallization method, a thermal crystallization method using an element which promotes crystallization such as nickel). A microcrystalline semiconductor, which is a SAS, can be crystallized by laser light irradiation to improve crystallinity. If the element which promotes crystallization is not introduced, hydrogen is released until a concentration of hydrogen contained in an amorphous semiconductor film becomes 1 × 10²⁰ atoms/cm³ or less by heating the amorphous semiconductor film at a temperature of 500°C for one hour under a nitrogen atmosphere before irradiating the amorphous semiconductor film with laser light. This is because an amorphous semiconductor film containing much hydrogen is damaged when irradiated with laser light. Examples of the heat treatment for crystallization include treatment with a heating furnace, laser irradiation, irradiation with light emitted from a lamp (also referred to as "lamp annealing"), and the like. Examples of a heating method include an RTA. method such as a GRTA (gas rapid thermal annealing) method or an LRTA (lamp rapid thermal annealing) method. GRTA is a method for performing heat treatment using a high-temperature gas, and LRTA is a method for performing heat treatment by lamp light.

The amorphous semiconductor film may be crystallized by a combination of heat treatment and laser light irradiation, or by several times of heat treatment or laser light irradiation alone.

The gate insulating film is formed by a CVD method, a sputtering method, or the like using an insulating material such as silicon oxide, silicon nitride, silicon oxynitride (SiOₓN_{y}) (x > y > 0), silicon nitride oxide (SiNₓO_{y}, x > y > 0). For example, if the gate insulating film has a two-layer structure, it is preferable to form a silicon oxynitride film for a first insulating film, and a silicon nitride oxide film for a second insulating film. It is also preferable to form a silicon oxide film for the first insulating film, and a silicon nitride film for the second insulating film.

The gate electrode layer can be formed by a sputtering method, an evaporation method, a CVD method, or the like. The gate electrode layer may be formed using an element selected from tantalum (Ta), tungsten (W), titanium (Ti), molybdenum (Mo), aluminum (Al), copper (Cu), chromium (Cr), and neodymium (Nd), or an alloy material or compound material containing the element as its main component. Alternatively, the gate electrode layer may be formed using a semiconductor film typified by a polycrystalline silicon film doped with an impurity element such as phosphorus, or an AgPdCu alloy. The gate electrode layer may be a single layer or stacked layers.

The gate electrode layer has a stacked-layer structure in this embodiment, and such a structure may be employed that one layer has a tapered shape and the other layer has a vertical plane formed by anisotropic etching. The gate electrode layers to be stacked may have different taper angles or the same taper angle. If the gate electrode layer has a tapered shape, the coverage thereof with a film to be stacked thereover is improved and defects can be reduced to improve reliability.

The source electrode layer or the drain electrode layer can be formed by forming a conductive film by a PVD method, a CVD method, an evaporation method, or the like and then etching the conductive film into a desired shape. Alternatively, the conductive layer can be selectively formed in a desired position by a droplet discharge method, a printing method, a dispenser method, an electroplating method, or the like. Still alternatively, a reflow method or a damascene method may be used. The source electrode layer or the drain electrode layer may be formed using a conductive material such as a metal, concretely, a material such as Ag, Au, Cu, Ni, Pt, Pd, Ir, Rh, W, Al, Ta, Mo, Cd, Zn, Fe, Ti, Zr, Ba, Si, or Ge, or an alloy or nitride thereof. Farther, a stacked structure thereof may be employed.

Note that without limitation to the production method of a thin film transistor described in this embodiment, the present invention can be applied to a top-gate structure (e.g., a staggered structure or a coplanar structure), a bottom-gate structure (e.g., an inverted coplanar structure), a dual-gate structure, in which two gate electrode layers are provided above and below a channel region each with a gate insulating film interposed therebetween, or other structures.

Note that in a production process of a thin film transistor, the n-type semiconductor layer, the photoelectric conversion layer, and the p-type semiconductor layer which constitute the photodiode in the display portion can be made in a similar manner to the semiconductor film in making the thin film transistor, and therefore the number of production steps thereof can be reduced.

The microcapsule in the electrophoretic element 853 explained in this embodiment performs display by controlling a potential difference between electrode layers which sandwich the microcapsule. Around the microcapsule is filled with a filling material such as a resin. The microcapsule has a diameter of about 10 µm to 200 µm, and a transparent liquid, a positively charged white microparticle, and a negatively charged black microparticle are encapsulated therein. When an electric field is applied between the electrode layers sandwiching the microcapsule, the white microparticle and the black microparticle move to opposite sides in the microcapsule, so that white or black can be displayed. A display element to which this principle is applied is referred to as "electronic paper" in general. Because the electrophoretic element has higher reflectance compared with a liquid crystal display element, an auxiliary light is unnecessary, less power is consumed, and a display portion can be recognized even in a dim place. Further, even when power is not supplied to the display portion, an image which has been displayed once can be retained. Therefore, the displayed image can favorably be stored even when a semiconductor device having a display function is moved away from a radio signal source.

The electrophoretic element 853 can be driven by a switching operation of the transistor 851. Therefore, the transistor 851 and the electrophoretic element 853 need to be electrically connected to each other through an interlayer film.

The conductive layer of the antenna portion explained in this embodiment is formed by a CVD method, a sputtering method, a printing method such as screen printing or gravure printing, a droplet discharging method, a dispenser method, a plating method, or the like using a conductive material. The conductive layer is formed of any of the following: aluminum (Al), titanium (Ti), silver (Ag), copper (Cu), gold (Au), platinum (Pt), nickel (Ni), palladium (Pd), tantalum (Ta), or molybdenum (Mo); or an alloy material or compound material containing these elements as its main component, to have a single-layer structure or a stacked-layer structure.

For example, when a conductive film to function as an antenna is formed by a screen printing method, the conductive film can be formed by selectively printing a conductive paste in which conductive particles having diameters of several nm to several tens of µm are dissolved or dispersed in an organic resin. The conductive particles can be fine particles or dispersive nanoparticles of one or more kinds of metals selected from silver (Ag), gold (Au), copper (Cu), nickel (Ni), platinum (Pt), palladium (Pd), tantalum (Ta), molybdenum (Mo), and titanium (Ti), or silver halide. Further, the organic resin contained in the conductive paste can be one or more of organic resins which function as a binder, a solvent, a dispersing agent, and a coating material of the metal particles. Typically, an organic resin such as an epoxy resin and a silicone resin can be given as examples. In forming the conductive layer, it is preferable that the conductive paste be baked after being applied. For example, when fine particles (e.g., diameters of 1 to 100 nm) containing silver as its main component are used as a material of the conductive paste, the conductive paste is hardened by being baked at temperatures of 150 to 300°C, so that the conductive film can be obtained. Further, it is also possible to use fine particles containing solder or lead-free solder as its main component. In this case, it is preferable to use fine particles with diameters of 20 µm or less. Solder and lead-free solder have the advantage of low cost.

The current-collecting thin film shown in the thin film secondary battery 857 explained in this embodiment is required to have high adhesion to the negative electrode active material layer, and low resistance. For example, aluminum, copper, nickel, vanadium, or the like can be used. For the negative electrode active material layer, vanadium oxide (V₂O₅) or the like can be used. For the solid electrolyte layer, lithium phosphate (Li₃PO₄) or the like can be used. For the positive electrode active material layer, lithium manganate (LiMn₂O₄), lithium cobalt oxide (LiCoO₂), or lithium nickel oxide (LiNiO₂) can be used.

Thin film layers of the current-collecting thin film, the negative electrode active material layer, the solid electrolyte layer, the positive electrode active material layer, and the current-collecting thin film may be formed using a sputtering technique or a vapor deposition technique. It is desirable that the current-collecting thin film, the negative electrode active material layer, the solid electrolyte layer, the positive electrode active material layer, and the current-collecting thin film each have a thickness of 0.1 to 3 µm.

For the interlayer film, an organic material, an inorganic material, or a stacked structure thereof can be used. For example, the interlayer insulating film can be formed using a material selected from silicon oxide, silicon nitride, silicon oxynitride, silicon nitride oxide, aluminum nitride, aluminum oxynitride, aluminum nitride oxide, which contains a larger amount of nitrogen than oxygen, aluminum oxide, diamond like carbon (DLC), polysilazane, carbon containing nitrogen (CN), PSG (phosphosilicate glass), BPSG (borophosphosilicate glass), alumina, and a substance containing another inorganic insulating material. Alternatively, an organic insulating material may be used. For the organic material, which may be either photosensitive or nonphotosensitive, polyimide, acryl, polyamide, polyimide amide, resist, benzocyclobutene, a siloxane resin, or the like can be used. The siloxane resin corresponds to a resin including a Si-O-Si bond. Siloxane has a skeleton structure of a bond of silicon (Si) and oxygen (O). For a substituent, an organic group containing at least hydrogen (such as an alkyl group or aromatic hydrocarbon) is used. For a substituent, a fluoro group may be used. Alternatively, for a substituent, an organic group containing at least hydrogen and a fluoro group may be used.

Provision of a partition wall between blocks of the display portion, the drive circuit and the controller portion, and the antenna portion and the battery portion explained above facilitates finding of a place of a defect when the defect occurs in any of the blocks in the display device. Further, forming the partition wall using a material for increasing airtightness can prevent a foreign substance from dispersing when the foreign substance comes in.

As explained above, the circuits which constitute the display device of the present invention can be formed over the identical substrate. Therefore, the process is common, which enables reduction of cost or the number of parts. In particular, the display device of the present invention does not need an input/output terminal such as an FPC or a cable for directly connecting to the display device and inputting an image signal to the display device directly, and can operate using a radio signal, so that the display device of the present invention is free from degradation of an FPC, a disconnection of a cable, and the like and can improve the reliability.

This embodiment can be carried out with a combination of a technical element in the embodiment mode or the other embodiment of this description. That is to say, the display device of this embodiment can transmit and receive a signal to/from the data transmitting and receiving device, and can give feedback of a demand of an operator of the display device. In addition, a distance in which a radio signal can be transmitted from the display device to the data transmitting and receiving device can be increased because the display device of the present invention can obtain image data and electric power for charging the battery. The display device of the present invention can transmit a signal input from the console portion as a radio signal to the exterior. Accordingly, the display device can make an external image signal transmitter transfer a desired setting, display image, and the like.

### [Embodiment 2]

This embodiment explains uses of the display device of the present invention. The display device of the present invention can be used by being provided for or incorporated in an object such as a certificate (a driver's license, a resident card, or the like), a recording medium (DVD software, a video tape, or the like), a vehicle (a bicycle or the like), a personal belonging (a bag, glasses, or the like), a human body, clothing, a daily commodity, or a product such as an electronic device. The electronic device includes a liquid crystal display device, an EL display device, a television unit (also referred to simply as a "TV", a "TV received, or a "television receiver"), a cellular phone, and the like.

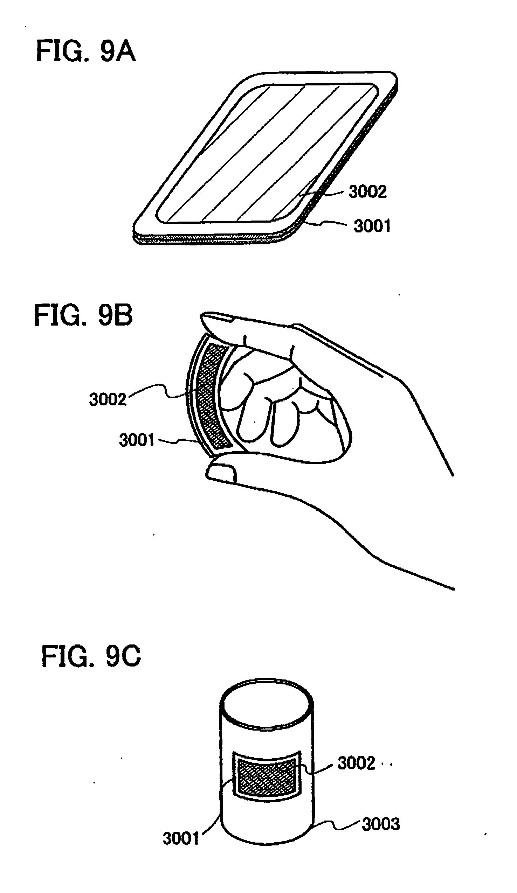

This embodiment explains an application of the present invention and an example of a commercial product to which the application article is attached with reference to FIGS. 9A to 9C.

FIG 9A shows a label-formed display device 3001. Providing the display device 3001, which has a display portion 3002, for a commercial product facilitates obtaining information about the commercial product which an operator wants to know. Further, the circuits of the display device of the present invention can be formed integrally over the identical substrate. Therefore, the display device 3001 has a curved surface shape as shown in FIG. 9B, and the present invention is effective also in attaching the display device 3001 to an object 3003 as shown in FIG. 9C.

This embodiment can be carried out with a combination of a technical element in the embodiment mode or the other embodiment of this description. That is to say, the display device of the present invention can transmit and receive a signal to/from the data transmitting and receiving device, and can give feedback of a demand of an operator of the display device. In addition, a distance in which a radio signal can be transmitted from the display device to the data transmitting and receiving device can be increased because the display device of the present invention can obtain image data and electric power for charging the battery. The display device of the present invention can transmit a signal input from the console portion as a radio signal to an outside. Accordingly, the display device can make an external image signal transmitter transfer a desired setting, display image, and the like.

The circuits which constitute the display device of the present invention can be formed over the identical substrate. Therefore, the process is common, which enables reduction of cost or the number of parts. In particular, the display device of the present invention does not need an input/output terminal such as an FPC or a cable for directly connecting to the display device and inputting an image signal to the display device directly, and can operate using a radio signal, so that the display device of the present invention is free from degradation of an FPC, a disconnection of a cable, and the like and can improve the reliability.

This application is based on Japanese Patent Application serial no. 2006-354991 filed with Japan Patent office on December 28, 2006, the entire contents of which are hereby incorporated by reference.

## Claims

1. A display device comprising:
a display portion having a display element;
a console portion;
an antenna portion to transmit and receive a radio signal;
a controller portion to control a signal output from the console portion and the radio signal transmitted or received by the antenna portion; and
a battery portion to retain electric power obtained by receiving the radio signal in the antenna portion and supply the electric power in order to drive the display portion.

2. A display device comprising:
a display portion having a display element;
a console portion;
an antenna portion to transmit and receive a radio signal;
a controller portion to control a signal output from the console portion and a signal transmitted or received by the antenna portion; and
a battery portion to retain electric power obtained by receiving the radio signal in the antenna portion and supply the electric power in order to drive the display portion;
wherein the display portion, the console portion, the antenna portion, the controller portion, and the battery portion are formed over a substrate.

3. The display device according to claim 1, wherein the display element is an electrophoretic element.

4. The display device according to claim 2, wherein the display element is an electrophoretic element.

5. The display device according to claims 2, wherein the substrate is flexible.

6. The display device according to claim 1, wherein the display portion, the console portion, the antenna portion, the controller portion, and the battery portion are provided overlapping each other.

7. The display device according to claim 2, wherein the display portion, the console portion, the antenna portion, the controller portion, and the battery portion are provided overlapping each other over the substrate.

8. The display device according to claim 1, wherein the display portion changes display according to transmission or reception of the radio signal.

9. The display device according to claim 2, wherein the display portion changes display according to transmission or reception of the radio signal.
